# EUROPÄISCHE PATENTSCHRIFT

(11) **EP 3 886 280 B1**
(45) Veröffentlichungstag und Bekanntmachung des Hinweises auf die Patenterteilung: **26.07.2023**
(21) Anmeldenummer: 21164361.4
(22) Anmeldetag: 23.03.2021
(51) Int. Cl.: H02G 3/12

(54) **ELEKTROINSTALLATIONSSYSTEM**
ELECTRIC INSTALLATION SYSTEM
SYSTÈME D'INSTALLATION ÉLECTRIQUE

(30) Priorität: 26.03.2020 ES 202030248
(43) Veröffentlichungstag der Anmeldung: 29.09.2021
(73) Patentinhaber: Fabrica Electrotecnica Josa, S.A.U., 08191 Rubi Barcelona (ES)
(72) Erfinder: Busquets Flo, Jorge, 08026 Barcelona (ES)
(74) Vertreter: Siemens Patent Attorneys

(56) Entgegenhaltungen:
- WO-A1-2015/075361
- CH-A5- 695 972
- DE-A1- 19 618 818

## Beschreibung

Die Erfindung betrifft ein Elektroinstallationssystem, aufweisend eine Hohlwanddose zur Aufnahme eines Elektroinstallationseinsatzes, beispielsweise eines Schalters, eines Tasters, einer Steckdose oder dergleichen, sowie einen Montagerahmen, welcher an der Hohlwanddose befestigbar ist.

Bei der elektrischen Ausrüstung von Gebäuden werden elektrische Leitungen von einem Elektroinstallationsverteiler in die einzelnen Räume verlegt, um Steckdosen, Schalter, Thermostate, Lichtauslässe oder dergleichen an das Stromnetz anzuschließen. Steckdosen, Schalter, Taster, aber auch Dimmer, Aktoren oder Sensoren werden auch als Elektroinstallationseinsätze bezeichnet. Da die Elektroinstallation heutzutage nicht mehr auf der Wand, sondern in der Wand "unter Putz" verlegt wird, werden für die Aufnahme der Elektroinstallationseinsätze in der Regel sogenannte Unterputzdosen verwendet. Dabei handelt es sich um zumeist aus Kunststoff gefertigte, napfartige Behältnisse, welche in das Mauerwerk, beispielsweise Ziegel oder Beton, eingesetzt und anschließend eingeputzt werden. Dabei ist zu beachten, dass die Unterputzdosen in der richtigen Tiefe ins Mauerwerk gesetzt werden und einen festen Halt in der Wand aufweisen. Derartige Unterputzdosen sind für den späteren Einbau von Steckdosen, Schaltern, Dimmern, Thermostaten, Telefon- und Antennendosen, für Abzweigungen und Leitungsverschaltungen oder dergleichen vorgesehen und sind - je nach Verwendung - in unterschiedlichen Größen, Tiefen und mit unterschiedlicher Anzahl von möglichen Kabeleinführungen erhältlich.

Anders als bei massiven Wänden werden für Wände mit Hohlräumen, zum Beispiel mit Gipskartonplatten aufgebaute Trockenbauwände, wie sie zumeist für einen flexiblen Innenausbau von Räumen verwendet werden, sogenannte Hohlwanddosen verwendet. Hohlwanddosen, auch als Schalter- oder Abzweigdosen bezeichnet und verwendet, sind das geeignete Pendant zur Unterputzdose und dienen ebenfalls der Aufnahme der oben bezeichneten Elektroinstallationseinsätze, beispielsweise beim Einbau von Schaltern und Steckdosen. Verschieden große Leitungseinlässe für das Hindurchführen verschieden dicker elektrischer Leitungen sind in der Regel an der Rückseite der Hohlwanddose angeordnet. Befestigt wird die Hohlwanddose in der Regel mit zwei an den Seiten vorhandenen Klemmschrauben bzw. Metallkrallen. Aus Gründen des Brandschutzes sind Hohlwanddosen in der Regel aus flammwidrigem Werkstoff hergestellt.

Aus der Patentschrift CH 695 972 A5 ist eine Hohlwanddose aus Kunststoff mit einem im Querschnitt runden, einseitig offenen Dosenkörper, mündungsseitigen flanschartigen Kragenteilen sowie mündungsseitig zugänglichen Befestigungsbereichen bekannt, an denen ein aufgelegter, rechteckiger Tragring mittels Schrauben befestigbar ist. Weiterhin ist aus der Druckschrift WO 2015/075361 A1 eine Montagedose zur Aufnahme eines Installationseinsatzes, beispielsweise eines Lichtschalters oder einer Steckdose, bekannt, welche ebenfalls einen Montagerahmen zur Befestigung der Montagedose aufweist. Ferner ist aus der Offenlegungsschrift DE 196 18 818 A1 eine Montagedose für eine Steckdose (sog. "Steckdosenzentralstück") bekannt, welche für eine rückseitige Montage in einer Befestigungsplatte vorgesehen und ausgebildet ist. Die Befestigungsplatte weist dabei eine kreisförmige Öffnung mit gegenüberliegenden Nuten und unterhalb konzentrisch gegenüberliegenden Rippen auf, durch die das Steckdosenzentralstück von unten durch die Öffnung steckbar ist, wobei vom am Steckdosenzentralstück angeformte Halter die Nuten der Öffnung passieren, bis am Steckdosenzentralstück angeformte Gegenlager an der Rückseite der Befestigungsplatte anschlagen.

Aus der europäischen Patentschrift EP 2 882 056 B1 ist eine Hohlwanddose bekannt, welche am Ende ihres im Wesentlichen zylindrischen Grundkörpers eine radial nach außen abstehende, ringförmige Krempe aufweist, welche verhindert, dass die Hohlwanddose beim Einsetzen in eine in der Hohlwand ausgebildete Öffnung zu tief in die Öffnung eingeführt wird. Damit die Hohlwanddose jedoch nach dem Einsetzen in die betreffende Öffnung bündig mit der Oberfläche der Wand abschließt, ist die Öffnung mit einer umlaufenden ringförmigen Senkung zu versehen, in der die ringförmige Krempe der Hohlwanddose flächenbündig aufgenommen ist.

Da das Anbringen der ringförmigen Senkung jedoch einen zusätzlichen Aufwand bei der Montagevorbereitung darstellt, ist es die die Aufgabe der vorliegenden Erfindung, ein Elektroinstallationssystem mit einer Hohlwanddose bereitzustellen, welche kostengünstig herzustellen und einfach zu montieren ist. Diese Aufgabe wird erfindungsgemäß durch das Elektroinstallationssystem gemäß Anspruch 1 gelöst. Vorteilhafte Ausgestaltungen sind Gegenstand der abhängigen Ansprüche.

Das erfindungsgemäße Elektroinstallationssystem weist eine Hohlwanddose sowie einen Montagerahmen auf. Die Hohlwanddose weist dabei einen rohrförmigen Grundkörper zur Aufnahme eines Elektroinstallationseinsatzes, beispielsweise eines Schalters, eines Tasters, einer Steckdose oder dergleichen, auf und ist in eine in einer Hohlwand ausgebildete Öffnung einsteckbar. Der rohrförmige Grundkörper ist an seinem ersten Ende mit einer Bodenwand verschlossen und weist an seinem zweiten Ende eine radial nach außen vorspringend an den Grundkörper angeformte Haltelasche auf. Weiterhin weist der Grundkörper zwei am Umfang einander gegenüberliegend angeordnete Befestigungsaufnahmen auf. Hierzu weist der Montagerahmen erste Öffnungen zur Durchführung jeweils eines Befestigungselements auf, welches mit jeweils einer der Befestigungsaufnahmen zusammenwirkt, um den Montagerahmen an der Hohlwanddose zu befestigen. Ferner weist der Montagerahmen eine Aussparung zur Aufnahme der Haltelasche auf, welche hinsichtlich ihrer Größe und Lage mit der Größe und Lage der Haltelasche korrespondiert, wobei die Haltelasche vollständig in der Aussparung aufgenommen ist, sodass der Montagerahmen bündig auf der Hohlwandoberfläche aufliegt.

Der rohrförmige oder zylindrische Grundkörper weist keine radial nach außen vorspringend angeformte, ringförmige Krempe auf, sondern lediglich eine zungenartige Haltelasche, welche nicht ringförmig, sondern lediglich an einem kurzen Abschnitt an den Rand des rohrförmigen Grundkörpers angeformt ist und dazu dient, die Eindringtiefe der Hohlwanddose in die Hohlwand zu begrenzen. Da die Hohlwanddose keine ringförmige Krempe aufweist, muss beim Erstellen der Öffnung auch keine ringförmige Senkung erstellt werden: Im montierten Zustand überragt die Haltelasche das zweite Ende des Grundkörpers und liegt auf der Oberfläche der Hohlwand auf, während das zweite Ende des rohrförmigen Grundkörpers bündig mit der Hohlwandoberfläche abschließt. Der Aufwand zum Erstellen der Öffnung kann dadurch deutlich reduziert werden.

Um ferner zu verhindern, dass der Montagerahmen im montierten Zustand einen durch die Dicke der Haltelasche bedingten Abstand zur Oberfläche der Hohlwand einnimmt, weist der Montageraumen eine Aussparung auf, welcher hinsichtlich ihrer Grö-ße und Lage mit der Größe und Lage der Haltelasche korrespondiert, so dass die Haltelasche vollständig in der Aussparung aufgenommen sind. Auf diese Weise ist gewährleistet, dass kein Abstand zwischen dem Halterahmen und der Hohlwandoberfläche bestehen bleibt und der Montagerahmen flächenbündig auf der Hohlwandoberfläche aufliegt.

Zur Befestigung des Montagerahmen an der Hohlwanddose weist diese zwei am Umfang einander gegenüberliegend angeordnete Befestigungsaufnahmen auf, in die Befestigungselemente - beispielsweise Schrauben - einsteckbar sind. Der Montagerahmen weist hierzu hinsichtlich ihrer Lage korrespondierende erste Öffnungen auf, durch die die Befestigungsmittel hindurchgesteckt und mit den Befestigungsaufnahmen verbunden werden können.

In einer vorteilhaften Weiterbildung des Elektroinstallationssystems weist der Grundkörper zwei am Umfang einander gegenüberliegend angeordnete Fixierelemente zur formschlüssigen Fixierung der Hohlwanddose in der Öffnung auf.

Mit Hilfe der beiden Fixierelemente ist die Hohlwanddose verliersicher in der in der Hohlwand ausgebildeten Öffnung fixierbar. Dies ist entweder irreversibel, d.h. nur durch Beschädigen der Fixierelemente realisierbar - beispielsweise mittels an die Hohlwanddose angeformte, federnde Schnapphaken, welche beim Einführen der Hohlwanddose in die Hohlwand deren Rückseite hintergreifen - oder auch reversibel, d.h. fest aber lösbar, realisierbar - beispielsweise mittels durch Schrauben betätigbare Spreizelemente, welche bei Zudrehen der Schrauben ebenfalls die Rückseite der Hohlwand hintergreifen. Beide Alternativen ermöglichen eine einfache und sichere Befestigung der Hohlwanddose in der Hohlwand.

In einer weiteren vorteilhaften Weiterbildung des Elektroinstallationssystems sind die Befestigungsaufnahmen und die Fixierelemente gleichmäßig versetzt zueinander am Umfang des Grundkörpers ausgebildet.

Sind zwei Befestigungsaufnahmen sowie zwei Fixierelementen jeweils einander gegenüberliegend am Umfang des Grundkörpers angeordnet, so weisen eine Befestigungsaufnahme und ein Fixierelement zueinander jeweils einen Umfangswinkel von 90° auf. Hierdurch wird die Montage der Hohlwanddose in der Hohlwandöffnung sowie des Montagerahmens an der Hohlwanddose deutlich vereinfacht. Dabei ist es ebenso möglich, mehr als zwei Befestigungsaufnahmen und/oder Fixierelemente am Umfang anzuordnen.

In einer weiteren vorteilhaften Weiterbildung des Elektroinstallationssystems sind zumindest ein Paar Haltelaschen radial nach außen vorspringend an den Grundkörper angeformt, wobei der Montagerahmen zumindest ein Paar Aussparungen zur Aufnahme jeweils eines Paars der Haltelaschen aufweist.

Durch die paarweise Anordnung der Haltelaschen ist die Position der Hohlwanddose beim Einsetzen in die Hohlwandöffnung einfacher zu definieren. Die Montage wird dadurch deutlich vereinfacht. Erfindungsgemäß können dabei auch zwei oder mehrere Paar Haltelaschen an den Grundkörper angeformt sein.

In einer weiteren vorteilhaften Weiterbildung des Elektroinstallationssystems sind die Haltelaschen äquidistant am Umfang des Grundkörpers angeordnet.

Durch die äquidistante, d.h. gleichmäßig voneinander beabstandete Anordnung der Haltelaschen wird eine exaktere Positionierung der der Hohlwanddose in der Hohlwandöffnung erreicht. Die Haltelaschen sind dabei jeweils paarweise einander gegenüberliegend angeordnet, so dass sie bei zwei Haltelaschen einen Umfangswinkel von 180°, bei vier Haltelaschen ein Umfangswinkel von 90° zueinander aufweisen.

In einer weiteren vorteilhaften Weiterbildung des Elektroinstallationssystems korrespondieren die am Montagerahmen ausgebildeten Aussparungen hinsichtlich Anzahl und Lage zur Anzahl und Lage der am Grundkörper der Hohlwanddose ausgebildeten Haltelaschen.

Erfindungswesentlich ist jedoch, dass die am Montagerahmen ausgebildeten Aussparungen hinsichtlich ihrer Lage zur Lage der Haltelaschen korrespondieren, d.h. dass die Haltelaschen allesamt in den Aussparungen aufgenommen sind, so dass kein durch die Haltelaschen bedingter Abstand zwischen der Hohlwandoberfläche und dem Halterahmen gebildet ist.

In einer weiteren vorteilhaften Weiterbildung des Elektroinstallationssystems sind die Befestigungsaufnahmen und Fixierelemente einerseits, sowie die Haltelaschen andererseits gleichmäßig versetzt zueinander am Umfang des Grundkörpers ausgebildet.

Durch die versetzte Anordnung können die einzelnen Funktionen der Befestigungsaufnahmen, der Fixierelemente sowie der Haltelaschen räumlich voneinander getrennt werden, wodurch die Montage weiter vereinfacht wird.

Im Folgenden wird ein Ausführungsbeispiel des Elektroinstallationssystems unter Bezug auf die beigefügten Figuren näher erläutert. In den Figuren sind:
- Figuren 1 und 2: schematische Darstellungen einer ersten vorbekannten Anordnung;
- Figuren 3 und 4: schematische Darstellungen einer zweiten vorbekannten Anordnung;

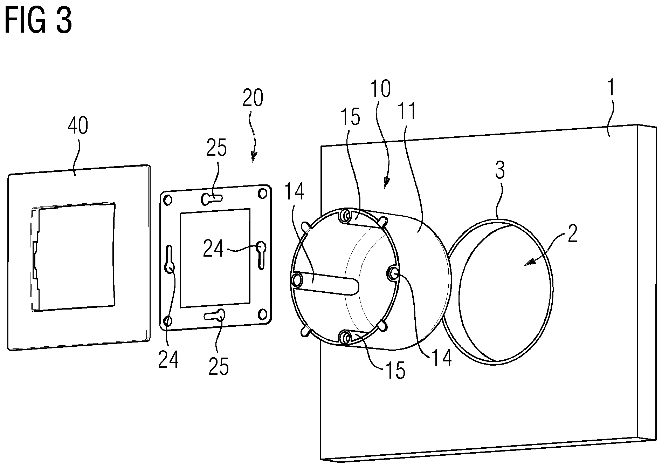

- Figuren 3 bis 7: schematische Darstellungen des erfindungsgemäßen Elektroinstallationssystems.

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

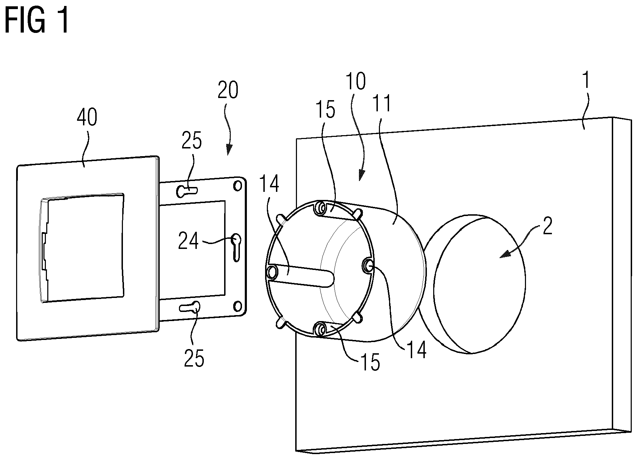

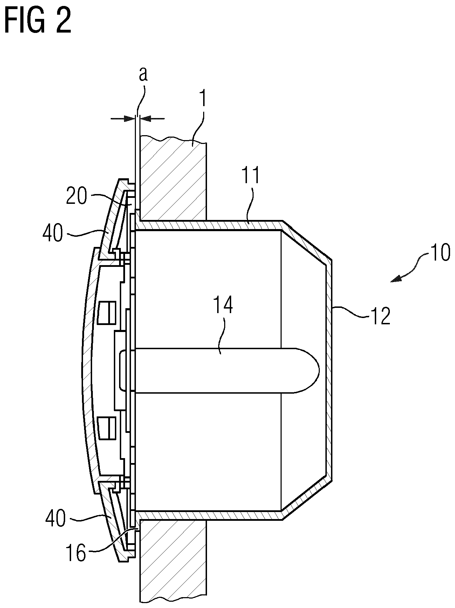

Die Figuren 1 und 2 zeigen schematisch eine erste, aus dem Stand der Technik vorbekannten Anordnung eines Elektroinstallationssystems in verschiedenen Ansichten und Montagezuständen. Figur 1 zeigt dabei eine perspektivische Explosionsdarstellung des Elektroinstallationssystems, während in Figur 2 das fertig montierte Elektroinstallationssystem in einer seitlichen Schnittdarstellung dargestellt ist. Das Elektroinstallationssystem besteht im Wesentlichen aus einer Hohlwanddose 10 sowie einem mit der Hohlwanddose 10 mit Hilfe geeigneter Befestigungselemente verbindbaren Montagerahmen 20.

Die Hohlwanddose 10 dient zur Aufnahme eines Elektroinstallationseinsatzes - beispielsweise eines Schalters, eines Tasters, einer Steckdose oder dergleichen - und ist in eine in einer Hohlwand 1 ausgebildete Öffnung 2 einsetzbar. Die Hohlwanddose 10 ist in der Regel aus einem Kunststoff gebildet und weist einen rohrförmigen, im Wesentlichen zylindrischen Grundkörper 11 auf, welcher an seinem ersten Ende mit einer Bodenwand 12 verschlossen ist. An seinem zweiten Ende weist der Grundkörper 11 einen radial nach außen vorspringend angeformten Halteflansch 16 auf, welcher dazu dient, die Einstecktiefe der Hohlwanddose 10 in die Öffnung 2 zu begrenzen. Da der Halteflansch 16 einen größeren Durchmesser als die Öffnung 2 aufweist, liegt er im montierten Zustand auf der Oberfläche der Hohlwand 1 auf. Weiterhin weist die Hohlwanddose 10 zwei Befestigungsaufnahmen 14 auf, welche an einer Innenseite des Grundkörpers 11 angeordnet sind und zur Befestigung des Halterahmens 20 an der Hohlwanddose 10 dienen.

Der Montagerahmen 20 weist hierzu zwei erste Öffnungen 24 zur Durchführung jeweils eines Befestigungselements - beispielsweise eine Schraube - auf, welche mit jeweils einer der Befestigungsaufnahmen 14 verbindbar ist, um den Montagerahmen 20 an der Hohlwanddose 10 sicher zu befestigen. Weiterhin weist der Montagerahmen 20 zwei zweite Öffnungen 25 auf, welche hinsichtlich ihrer Lage mit zwei am Grundkörper 11 ausgebildeten Fixierelementen 15 korrespondieren. Die Fixierelemente 15 dienen zur formschlüssigen Fixierung der Hohlwanddose 10 in der Öffnung 2 und können mit einem hierfür geeigneten Werkzeug, beispielsweise einem Schraubendreher, durch die beiden zweiten Öffnungen 25 hindurch betätigt werden. Um einen optisch ansprechenden Eindruck zu vermitteln, ist der Halterahmen 20 nach der Montage mittels eines daran befestigbaren Zier- oder Blendrahmens 40 abdeckbar.

Die in den Figuren 1 und 2 dargestellte Anordnung hat jedoch den Nachteil, dass der Halteflansch 16 auf der äußeren Oberfläche der Hohlwand 1 aufliegt, wodurch der anschließend an der Hohlwanddose 10 befestigte Halterahmen 20 - und damit auch der daran befestigte Blendrahmen 40 - einen Abstand a zur Oberfläche der Hohlwand 1 aufweist.

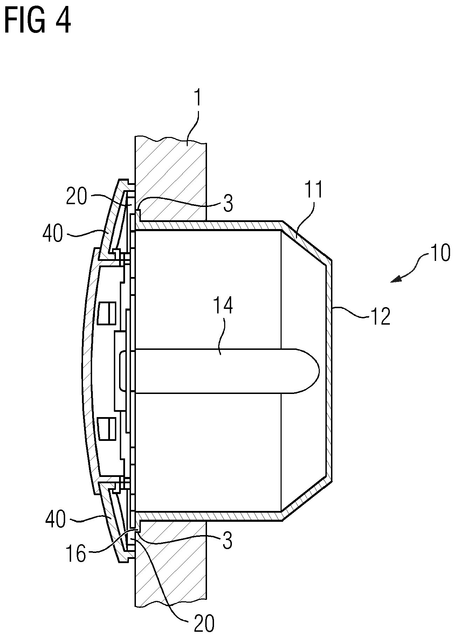

In den Figuren 3 und 4 zeigen - korrespondierend zu den Darstellungen der Figuren 1 und 2 - schematisch eine zweite, aus dem Stand der Technik vorbekannten Anordnung eines Elektroinstallationssystems in verschiedenen Ansichten und Montagezuständen. Figur 3 zeigt dabei wiederum eine perspektivische Explosionsdarstellung des Elektroinstallationssystems, während in Figur 4 wiederum das fertig montierte Elektroinstallationssystem in einer seitlichen Schnittdarstellung dargestellt ist. Im Unterschied zu der in den Figuren 1 und 2 dargestellten Anordnung weist die in der Hohlwand 1 ausgebildete Öffnung 2 eine ringförmige Senkung 3 auf. Dabei handelt es sich um eine zylindrische Vertiefung, welche dazu dient, den kragenartigen Halteflansch 16 aufzunehmen, so dass die in die Öffnung 2 eingesetzte Hohlwanddose 10 bündig mit der Oberfläche der Hohlwand 1 abschließt. Auf diese Weise ist ein Abstand zwischen dem Montagerahmen 20 und der Oberfläche der Hohlwand 1 - wie in Figur 2 dargestellt - vermeidbar. Jedoch ist hierfür bei der Erstellung der Öffnung 2 zusätzlich die Senkung 3 zu erstellen, was mit einem zusätzlichen Montageaufwand verbunden ist.

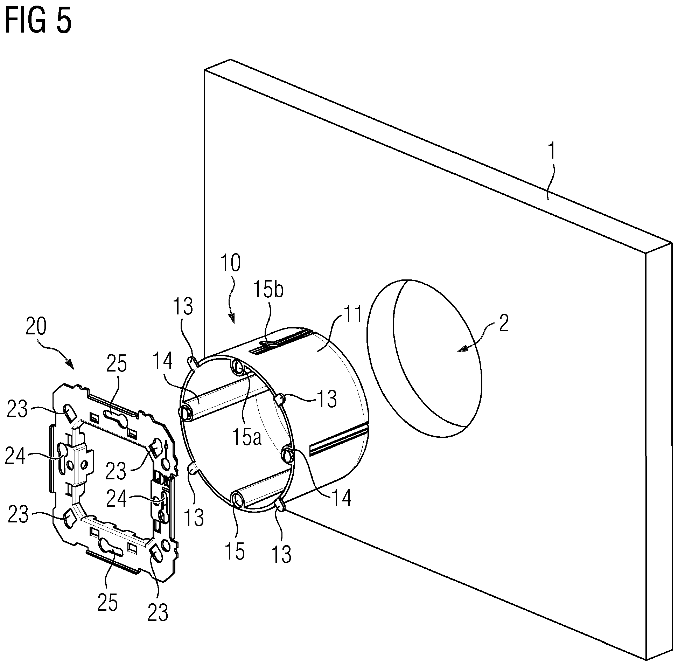

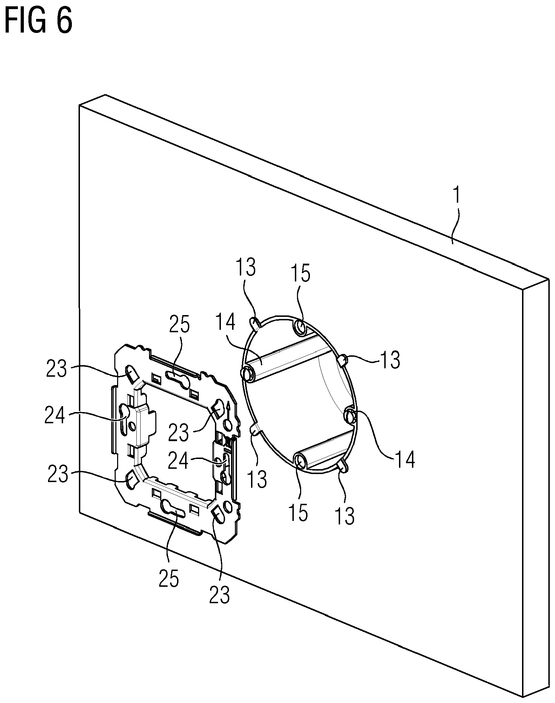

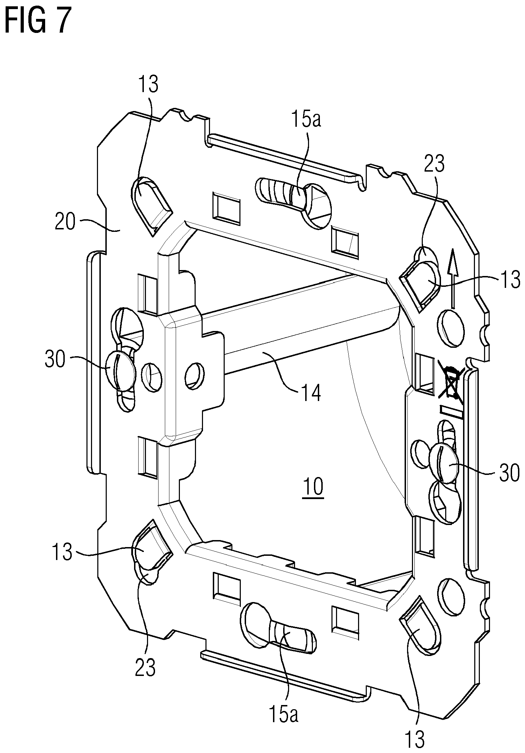

In den Figuren 5 bis 7 ist das erfindungsgemäße Elektroinstallationssystem in verschiedenen Montagezuständen schematisch dargestellt. Figur 5 zeigt dabei die Hohlwanddose 10 und den Montagerahmen 20 vor dem Einsetzen in die in der Hohlwand 1 ausgebildete Öffnung 2, während in Figur 6 die Hohlwanddose 10 bereits in die Öffnung 2 eingesetzt ist. Figur 7 zeigt schließlich die eingesetzte Hohlwanddose 10 mit dem mittels zweier Befestigungselemente 30 daran montierten Montagerahmen 20.

Im Unterschied zu den in den Figuren 1 bis 4 dargestellten Anordnungen zeichnet sich das erfindungsgemäße Elektroinstallationssystem dadurch aus, dass die Hohlwanddose 10 keinen Halteflansch, sondern lediglich vier Haltelaschen 13 aufweist, welche am zweiten Ende des Grundkörpers 11 radial nach außen vorspringend an diesen angeformt sind. Analog zu dem in den Figuren 1 bis 4 dargestellten Halteflansch 16 dienen die Haltelaschen 13 der erfindungsgemäßen Hohlwanddose 10 dazu, deren Einstecktiefe in die Öffnung 2 zu begrenzen. Hierbei ist anzumerken, dass die Öffnung 2 keine Senkung aufweist: die Haltelaschen 13 liegen - ebenso wie der in Figur 2 dargestellte Halteflansch 16 - unmittelbar auf der Oberfläche der Hohlwand 1 auf.

Um einen - wie in Figur 2 dargestellten - Abstand a zwischen dem Montagerahmen 20 und der Oberfläche der Hohlwand 1 zu vermeiden, weist der erfindungsgemäße Halterahmen 20 vier Aussparungen 23 auf, welche hinsichtlich ihrer Lage und Größe zur Lage und Größe der vier an der Hohlwanddose 10 ausgebildeten Haltelaschen 13 korrespondieren. Dies führt dazu, dass im montieren Zustand die Haltelaschen 13 vollständig in den Aussparungen 23 aufgenommen sind. Dadurch verbleibt kein Abstand zwischen dem Halterahmen 20 und der Hohlwandoberfläche bestehen - der Halterahmen liegt (im montieren Zustand) flächenbündig auf der Oberfläche der Hohlwand 1 auf.

In dem dargestellten Beispiel sind die zwei Befestigungsaufnahmen 14 und die zwei Fixierelemente 15 jeweils einander gegenüberliegend am Umfang des Grundkörpers 11 ausgebildet. Weiterhin sind die Befestigungsaufnahmen 14 und die Fixierelemente 15 gleichmäßig versetzt zueinander am Umfang des Grundkörpers 11, d.h. mit einem Umfangswinkel von 90° zueinander, ausgebildet. Dies ist jedoch nicht zwingend erforderlich. Die Fixierelemente 15 weisen vorliegend jeweils eine Fixierschraube 15a auf, mit deren Hilfe eine Fixierkralle 15b betätigbar derart ist, dass bei Anziehen der Fixierschraube 15a die Fixierkralle 15b vom Grundkörper 11 aus radial nach außen bewegt wird, um im montierten Zustand die Hohlwand 1 formschlüssig zu hintergreifen. Die Fixierelemente 15 dienen zur formschlüssigen Fixierung der Hohlwanddose 10 in der Öffnung 2 und können mit einem hierfür geeigneten Werkzeug, beispielsweise einem Schraubendreher, durch die beiden zweiten Öffnungen 25 hindurch betätigt werden. Auf diese Weise ist es möglich, die in die Öffnung 2 eingesetzte Hohlwanddose 10 zunächst nur leicht mittels der Fixierelemente 15 zu fixieren, um zuerst den Halterahmen 20 relativ zur Hohlwanddose 10 auszurichten und zu fixieren. Anschließend können die Fixierelemente 15 vollständig angezogen werden, um einen sicheren Halt der Hohlwanddose 10 in der Hohlwand 1 zu erreichen. Um die horizontale oder vertikale Justage des Halterahmens 20 zu erleichtern, sind die ersten und zweiten Öffnungen 23, 24 dabei jeweils als Langlöcher ausgebildet.

Ferner sind die vier Haltelaschen 13 derart an den Grundkörper 11 angeformt, dass sie zu den Befestigungsaufnahmen und Fixierelementen um 45° versetzt angeordnet sind, d.h. die Haltelaschen 13 weisen zu den Befestigungsaufnahmen/Fixierelementen 14, 15 einen Umfangswinkel von 45° auf.

### Bezugszeichenliste

- 1: Hohlwand
- 2: Öffnung
- 3: Senkung

- 10: Hohlwanddose
- 11: Grundkörper
- 12: Bodenwand
- 13: Haltelasche
- 14: Befestigungsaufnahme
- 15: Fixierelement
15a Fixierschraube
15b Fixierkralle
- 16: Halteflansch

- 20: Montagerahmen
- 23: Aussparung
- 24: erste Öffnung
- 25: zweite Öffnung

- 30: Befestigungselement

- 40: Blendrahmen

- a: Abstand

## Patentansprüche

1. Elektroinstallationssystem, aufweisend:
- eine Hohlwanddose (10) mit einen rohrförmigen Grundkörper (11) zur Aufnahme eines Elektroinstallationseinsatzes, beispielsweise eines Schalters, eines Tasters, einer Steckdose oder dergleichen, welche in eine in einer Hohlwand (1) ausgebildete Öffnung (2) einsteckbar ist,
- wobei der rohrförmige Grundkörper (11) an seinem ersten Ende mit einer Bodenwand (12) verschlossen ist und an seinem zweiten Ende eine radial nach au-ßen vorspringend an den Grundkörper (11) angeformte Haltelasche (13) aufweist,
- wobei der Grundkörper (11) zwei am Umfang einander gegenüberliegend angeordnete Befestigungsaufnahmen (14) aufweist, sowie
- einen Montagerahmen (20) mit ersten Öffnungen (24) zur Durchführung jeweils eines Befestigungselements (30), welches mit jeweils einer der Befestigungsaufnahmen (14) zusammenwirkt, um den Montagerahmen (20) an der Hohlwanddose (10) zu befestigen,
**dadurch gekennzeichnet,**
**dass** der Montagerahmen (20) eine Aussparung (23) zur Aufnahme der Haltelasche (13) aufweist, welche hinsichtlich ihrer Größe und Lage mit der Größe und Lage der Haltelasche korrespondiert, wobei die Haltelasche vollständig in der Aussparung aufgenommen ist, so dass der Montagerahmen (20) bündig auf einer Oberfläche der Hohlwand (1) aufliegt.

2. Elektroinstallationssystem nach Anspruch 1,
**dadurch gekennzeichnet,**
**dass** der Grundkörper (11) zwei am Umfang einander gegenüberliegend angeordnete Fixierelemente (15) zur formschlüssigen Fixierung der Hohlwanddose (10) in der Öffnung (2) aufweist.

3. Elektroinstallationssystem nach einem der vorherigen Ansprüche, **dadurch gekennzeichnet, dass** die Befestigungsaufnahmen (14) und die Fixierelemente (15) gleichmäßig versetzt zueinander am Umfang des Grundkörpers (11) ausgebildet sind.

4. Elektroinstallationssystem nach einem der vorherigen Ansprüche, **dadurch gekennzeichnet,**
- **dass** zumindest ein Paar Haltelaschen (13) radial nach außen vorspringend an den Grundkörper (11) angeformt sind,
- **dass** der Montagerahmen (20) zumindest ein Paar Aussparungen (23) zur Aufnahme jeweils eines Paars der Haltelaschen (13) aufweist.

5. Elektroinstallationssystem nach Anspruch 4,
**dadurch gekennzeichnet,**
**dass** die Haltelaschen (13) äquidistant am Umfang des Grundkörpers (11) angeordnet sind.

6. Elektroinstallationssystem nach einem Ansprüche 4 oder 5,
**dadurch gekennzeichnet,**
**dass** die am Montagerahmen (20) ausgebildeten Aussparungen (23) hinsichtlich Anzahl und Lage zur Anzahl und Lage der Haltelaschen (13) korrespondieren.

7. Elektroinstallationssystem nach einem Ansprüche 4 bis 6,
**dadurch gekennzeichnet,**
**dass** die Befestigungsaufnahmen (14) und Fixierelemente (15) einerseits, sowie die Haltelaschen (13) andererseits gleichmäßig versetzt zueinander am Umfang des Grundkörpers (11) ausgebildet sind.

## Claims

1. Electrical installation system, having:
- a cavity wall box (10) with a tubular main body (11) for receiving an electrical installation insert, for example a switch, a plug, a plug socket or the like, which cavity wall box can be inserted into an opening (2) formed in a cavity wall (1),
- wherein the tubular main body (11) is closed off at its first end by a bottom wall (12) and has at its second end a retaining lug (13) integrally formed on the main body (11) in a manner projecting radially outwards,
- wherein the main body (11) has two fastening receptacles (14) arranged opposite each other on the periphery, and
- a mounting frame (20) with first openings (24) for guiding through in each case one fastening element (30), which interacts with a respective one of the fastening receptacles (14), in order to fasten the mounting frame (20) to the cavity wall box (10),
**characterized**
**in that** the mounting frame (20) has a cutout (23) for receiving the retaining lug (13), which cutout, in respect of its size and position, corresponds to the size and position of the retaining lug, wherein the retaining lug is completely received in the cutout, so that the mounting frame (20) rests flush on a surface of the cavity wall (1).

2. Electrical installation system according to Claim 1,
**characterized**
**in that** the main body (11) has two fixing elements (15) arranged opposite each other on the periphery for fixing the cavity wall box (10) in the opening (2) in a positively locking manner.

3. Electrical installation system according to either of the preceding claims,
**characterized**
**in that** the fastening receptacles (14) and the fixing elements (15) are formed on the periphery of the main body (11) in a manner uniformly offset in relation to one another.

4. Electrical installation system according to one of the preceding claims,
**characterized**
- **in that** at least one pair of retaining lugs (13) are integrally formed on the main body (11) in a manner projecting radially outwards,
- **in that** the mounting frame (20) has at least one pair of cutouts (23) for receiving a respective pair of the retaining lugs (13).

5. Electrical installation system according to Claim 4,
**characterized**
**in that** retaining lugs (13) are arranged equidistantly on the periphery of the main body (11).

6. Electrical installation system according to either of Claims 4 and 5,
**characterized**
**in that** the cutouts (23) formed on the mounting frame (20), in respect of number and position, correspond to the number and position of the retaining lugs (13).

7. Electrical installation system according to one of Claims 4 to 6,
**characterized**
**in that** the fastening receptacles (14) and fixing elements (15) on the one hand and the retaining lugs (13) on the other are formed on the periphery of the main body (11) in a manner uniformly offset in relation to one another.

## Revendications

1. Système d'installation électrique, présentant :
- une boîte à paroi creuse (10) avec un corps de base tubulaire (11) permettant le logement d'un appareillage d'installation électrique, par exemple d'un commutateur, d'un bouton-poussoir, d'une prise secteur ou similaire, qui est enfichable dans une ouverture (2) réalisée dans une paroi creuse (1),
- dans lequel le corps de base tubulaire (11) est fermé au niveau de sa première extrémité avec une paroi de fond (12) et présente au niveau de sa seconde extrémité une patte de maintien (13) formée en saillie radialement vers l'extérieur au niveau du corps de base (11),
- dans lequel le corps de base (11) présente deux logements de fixation (14) disposés de manière opposée l'un à l'autre au niveau de la périphérie, ainsi
- qu'un cadre de montage (20) avec des premières ouvertures (24) permettant l'insertion respectivement d'un élément de fixation (30) qui coopère avec respectivement un des logements de fixation (14) pour fixer le cadre de montage (20) à la boîte à paroi creuse (10),
**caractérisé en ce que** le cadre de montage (20) présente une cavité (23) permettant le logement de la patte de maintien (13) qui correspond, en ce qui concerne sa taille et sa position, à la taille et à la position de la patte de maintien, dans lequel la patte de maintien est logée en totalité dans la cavité, de sorte que le cadre de montage (20) s'appuie de manière à être à fleur sur une surface de la paroi creuse (1).

2. Système d'installation électrique selon la revendication 1, **caractérisé en ce que** le corps de base (11) présente deux éléments de fixation (15) disposés de manière opposée l'un à l'autre au niveau de la périphérie pour la fixation par complémentarité de formes de la boîte à paroi creuse (10) dans l'ouverture (2).

3. Système d'installation électrique selon l'une quelconque des revendications précédentes, **caractérisé en ce que** les cadres de fixation (14) et les éléments de fixation (15) sont réalisés avec un décalage régulier les uns par rapport aux autres au niveau de la périphérie du corps de base (11).

4. Système d'installation électrique selon l'une quelconque des revendications précédentes, **caractérisé en ce**
- **qu'**au moins une paire de pattes de maintien (13) sont formées radialement vers l'extérieur en saillie vers le corps de base (11),
- **que** le cadre de montage (20) présente au moins une paire de cavités (23) permettant le logement respectif d'une paire des pattes de maintien (13).

5. Système d'installation électrique selon la revendication 4, **caractérisé en ce que** les pattes de maintien (13) sont disposées de manière équidistante au niveau de la périphérie du corps de base (11).

6. Système d'installation électrique selon l'une quelconque des revendications 4 ou 5, **caractérisé en ce que** les cavités (23) réalisées au niveau du cadre de montage (20) correspondent en ce qui concerne le nombre et la position au nombre et à la position des pattes de maintien (13).

7. Système d'installation électrique selon l'une quelconque des revendications 4 à 6, **caractérisé en ce que** les logements de fixation (14) et les éléments de fixation (15) d'une part ainsi que les pattes de maintien (13) d'autre part sont réalisés avec un décalage régulier les uns par rapport aux autres au niveau de la périphérie du corps de base (11).
